# EUROPEAN PATENT SPECIFICATION

(11) **EP 1 183 095 B1**
(45) Date of publication and mention of the grant of the patent: **20.12.2006**
(21) Application number: 00909275.0
(22) Date of filing: 01.03.2000
(51) Int. Cl.: B01F 13/00, B01F 15/02, A01K 5/00

(54) **IMPROVED MIXER TRUCK**
VERBESSERTES MISCHERFAHRZEUG
CAMION MELANGEUR AMELIORE

(30) Priority: 19.05.1999 IT PD990107
(43) Date of publication of application: 06.03.2002
(73) Proprietor: Unifast S.r.l., 35023 Bagnoli di Sopra (Padova) (IT)
(72) Inventor: FACCIA, Alessandra, I-35021 Agna (IT)
(74) Representative: Cantaluppi, Stefano
(86) International application number: PCT/EP2000/001718
(87) International publication number: WO 2000/071239

(56) References cited:
- EP-A- 0 393 583
- WO-A-95/20869
- DE-A- 3 708 218
- DE-A- 19 714 553
- GB-A- 1 331 005
- US-A- 4 940 335

## Description

### Technical field

The present invention relates to an improved mixer truck according to the preamble to the main claim.

### Background art

Within the range of activities connected with stock rearing, it is known to use mixer trucks for animal feed. These mixer trucks are generally equipped with means for the loading and transportation of the feed mixtures, for the mixing of the feed mixtures by means of suitable stirrers and, finally, for the continuous distribution of the feed mixtures.

However the loading means provided often project notably from the load-bearing structures of these trucks, thus imposing serious limitations on their manoeuvrability. Moreover, the resulting considerable bulkiness hinders safe driving of the mixer truck along public roads.
Known mixing trucks are disclosed in GB1331005, US4940335, W09520869, DE3708218 and EP0393583.
GB1331005 is considered to represent the closest prior art to the present invention. It discloses a self-propelled mixer truck comprising a load bearing structure, a mixing container and an adjustable length loading means for loading the mixing container. The loading means include a belt conveyor having a belt forming a loop on pulleys so that its length can be adjusted by telescopic movement of one part of the conveyor relative to the other.

### Disclosure of the invention

The problem upon which the present invention is based is that of providing a mixer truck which is designed structurally and functionally to overcome the disadvantages complained of above with reference to the prior art mentioned.

This problem is solved by the present invention by means of a mixer truck formed in accordance with the appended claims.

### Brief description of the drawings

The characteristics and the advantages of the invention will become clearer from the detailed description of a preferred embodiment thereof, described by way of nonlimiting example with reference to the appended drawings, in which:
- Figure 1 is a partially-sectioned, schematic side view of a mixer truck formed in accordance with the present invention, with loading means extending in a first operative position,
- Figure 2 is a partially-sectioned, schematic side view of the mixer truck of Figure 1 with loading means retracted in a second, inoperative position,

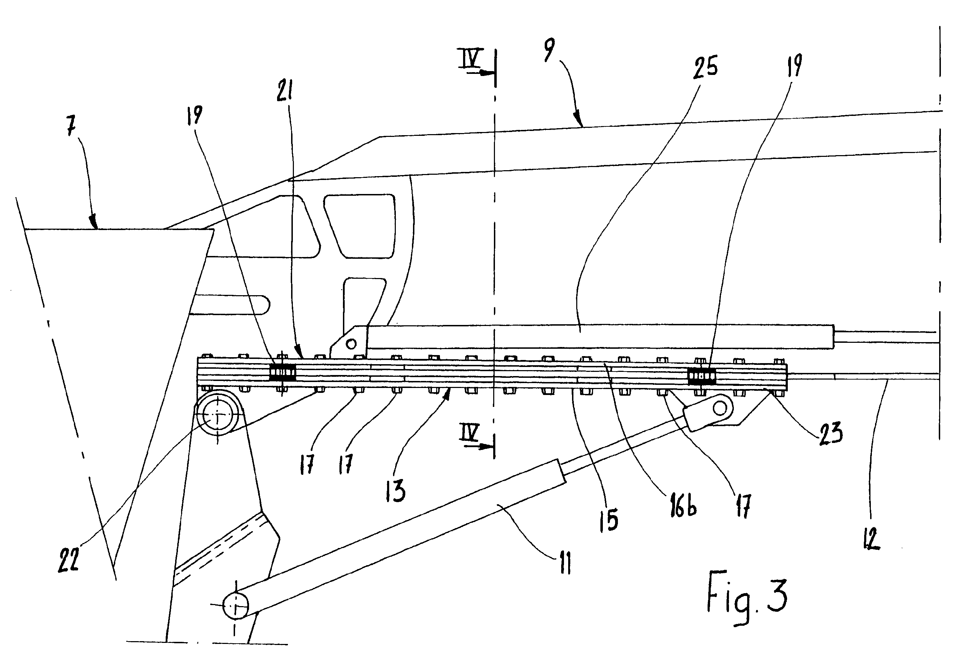

- Figure 3 is a schematic side view in an enlarged scale of a detail of Figure 1,

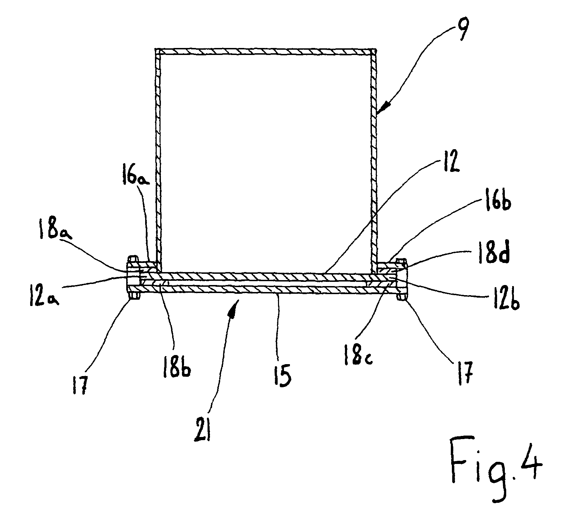

- Figure 4 is a partial view of the detail of Figure 3, sectioned in the plane IV-IV.

### Best mode of carrying out the invention

With reference to the drawings mentioned, a mixer truck formed in accordance with the present invention is generally indicated 1.

The mixer truck 1 comprises a load-bearing structure 2 of predominantly longitudinal extent, in which opposed end regions 3 and 4 are defined.

A mixing container 7 having internal means for mixing feed mixtures for feeding animals is mounted in the end region 3 of the load-bearing structure 2. The mixing means are of conventional type and are not shown in the appended drawings.

Transverse axles 5 and 6 having wheels fitted with tyres are supported in the end regions 3 and 4 of the load-bearing structure 2 and a driving cab 8 is arranged upright in a substantially intermediate position thereof; loading means 9 extend longitudinally beside the cab 8 and have a transverse milling loader 10 at their end remote from the mixing container 7.

Translation means 20 provided between the load-bearing structure 2 and the loading means 9 comprise actuator means 25 and guide means 21 for moving the loading means 9 away from and towards the mixing container 7. The guide means 21 in turn comprise a frame 13 parallel to the loading means 9 and supported for pivoting at an end 22 thereof in the vicinity of the mixing container 7 to define a transverse and substantially horizontal swing axis. Swing actuator means 11 of the hydraulic-jack type also extend between the opposite end 23 of the frame 13 and the load-bearing structure 2 for pivoting the frame 13 about the swing axis.

The loading means 9 comprise, along a predominant portion of their longitudinal dimension, a plate 12 having longitudinal lateral appendages 12a and 12b. The appendages 12a and 12b are engaged for sliding in the frame 13 which, in addition to its main function of guiding the translational movement, thus also constitutes a support for the loading means 9 on the load-bearing structure 2.

The frame 13 comprises a plate 15 parallel to the plate 12 and coplanar strip-like elements 16a and 16b parallel to the plate 15 and arranged on transversely opposite sides of the loading means 9. The strip-like elements 16a and 16b are also located on the opposite side of the plate 12 to the plate 15 and are fixed to the plate 15 by means of bolts 17 for restraining the appendages 12a and 12b of the plate 12. Further strip-like elements 18a, 18b, 18c, 18d, preferably made of bronze to prevent any seizure during sliding, are interposed between the plate 15 and the plate 12 and between the latter and the elements 16a and 16b. The guide means 21 further comprise bearings, all indicated 19, which have axes perpendicular to the plate 15 and are supported on the frame 13 so as to be coplanar with the plate 12, with their outer ring in contact with the appendages 12a and 12b thereof.

The functional characteristics of the mixer truck 1 comprise both the ability of the loading means 9 to pivot vertically, by virtue of the operation of the swing actuator means 11, about the swing axis defined at the end 22 of the frame 13, and the ability of these loading means 9 to translate relative to the load-bearing structure 2, by virtue of the translation means 20.

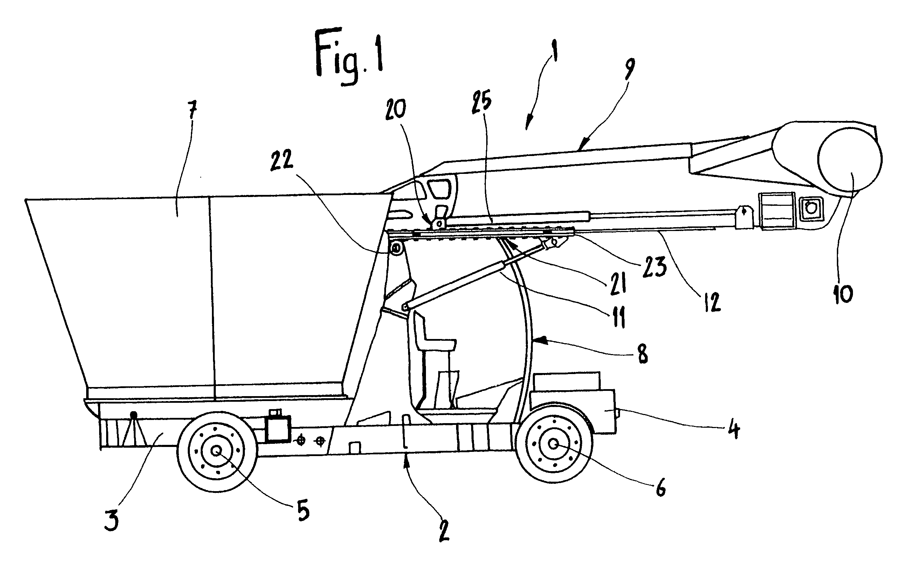

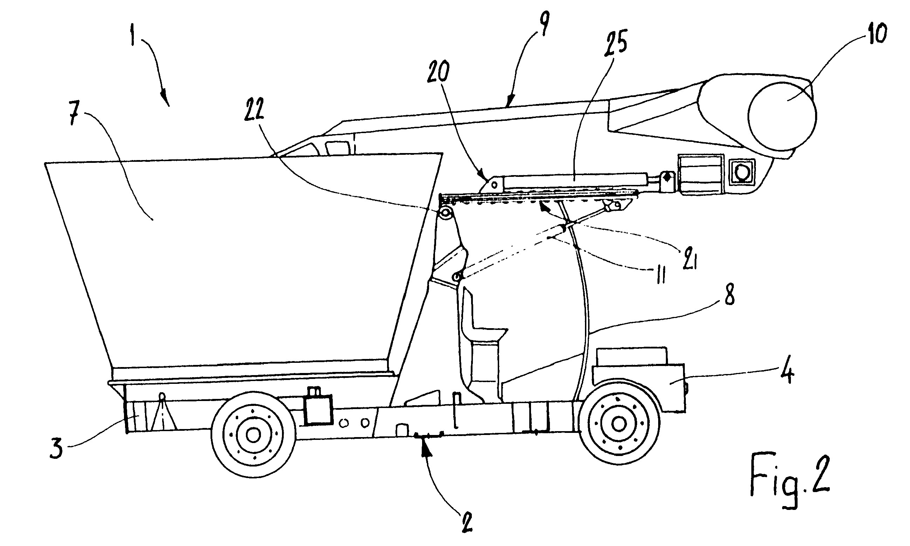

The action of the translation means 20 thus defines a first operative position of the mixer truck 1 in which the loading means 9 extend longitudinally away from the mixing container 7 to the maximum extent (Figure 1) and a second, inoperative position of the truck 1 in which the loading means 9 are retracted towards the mixing container 7 (Figure 2). In this second, inoperative position, the loading means 9 are superimposed on the load-bearing structure 2 to a greater extent and are partially housed in the mixing container 7.

The present invention thus remedies the limitations of known mixer trucks and, moreover, has many advantages amongst which are improved manoeuvrability of the truck achieved by its greater compactness when the loading means are in the inoperative position.

A further advantage consists of facilitated storage of the mixer truck.

## Claims

1. A mixer truck for preparing feed mixtures, comprising a load-bearing structure (2), a mixing container (7) mounted on the load-bearing structure (2), and means (3), associated with the load-bearing structure (2), for loading the mixing container (7), whereby the loading means (3) comprise a milling loader (10) and means (20) are provided for translating the loading means (3) relative to said load-bearing structure (2) and said mixing container (7), away from and towards the mixing container (7) between a first, operative position in which they extend away from the mixing container to a maximum extent and a second, inoperative position, in which they are at least partially superimposed on the load-bearing structure (2) and at least partially housed in the mixing container (7).

2. A truck according to Claim 1, in which the means (20) for translating the loading means (3) include actuator means (25) acting between the loading means (3) and the load-bearing structure (2) and guide means (21) constituting a support for the loading means (3) on the load-bearing structure (2).

3. A truck according to Claim 2, in which the loading means (3) comprise a first laterally projecting appendage (12a) and a second laterally projecting appendage (12b), and the guide means (21) comprise a frame (13) mounted pivotably on the load-bearing structure (2) and bearing respective guide members (15, 16a, 16b) in which the said appendages (12a, 12b) are slidably restrained.

4. A truck according to Claim 3, in which the frame (13) can pivot about a substantially horizontal swing axis and has swing actuator means (11) acting between the frame (13) and the load-bearing structure (11) in order to swing the loading means about the swing axis.

5. A truck according to Claim 4, in which the swing axis is substantially perpendicular to the axis of translation of the loading means (3) by the translation means (20).

6. A truck according to Claim 4, in which the swing axis is disposed at one end of the frame (13) and the swing actuator means (11) act on an opposite end (23) of the frame (13), remote from the swing axis.

7. A truck according to one or more of the preceding claims, in which the truck is self-propelled.

## Patentansprüche

1. Mischfahrzeug zum Zubereiten von Futtermischungen, umfassend:
einen Last tragenden Aufbau (2), einen auf dem Last tragenden Aufbau (2) angebrachten Mischbehälter (7), und eine mit dem Last tragenden Aufbau (2) verbundene Vorrichtung (9) zum Beladen des Mischbehälters (7), wobei die Beladevorrichtung (9) einen Zerkleinerungsbelader (10) umfasst, und eine Vorrichtung (20) zum Versetzen der Beladevorrichtung (9) relativ zu dem Last tragenden Aufbau (2) und dem Mischbehälter (7), weg von und in Richtung des Mischbehälters (7), zwischen einer ersten Betriebsposition, in welcher sie sich in einer maximalen Ausdehnung von dem Mischbehälter (7) weg erstreckt, und einer zweiten Außer-Betrieb-Position, in welcher sie zumindest teilweise dem Last tragenden Aufbau (2) überlagert ist, und mindestens teilweise in dem Mischbehälter (7) aufgenommen ist, vorgesehen ist.

2. Fahrzeug gemäß Anspruch 1, wobei die Vorrichtung (20) zum Versetzen der Beladevorrichtung (9) eine Aktuatorvorrichtung (25), die zwischen der Beladevorrichtung (9) und dem Last tragenden Aufbau (2) wirkt, und eine Führungsvorrichtung (21), die eine Abstützung für die Beladevorrichtung (9) auf dem Last tragenden Aufbau (2) bildet, umfasst.

3. Fahrzeug gemäß Anspruch 2, wobei die Beladevorrichtung (9) einen ersten lateral vorstehenden Fortsatz (12a) und einen zweiten lateral vorstehenden Fortsatz (12b) umfasst, und die Führungsvorrichtung (21) einen schwenkbar auf dem Last tragenden Aufbau (2) angebrachten Rahmen (13) umfasst, und jeweils Führungselemente (15,16a,16b) stützt, in welchen die Fortsätze (12a,12b) gleitbar eingespannt sind.

4. Fahrzeug gemäß Anspruch 3, wobei der Rahmen 13 um eine im Wesentlichen horizontale Drehachse schwenken kann und eine Drehaktuatorvorrichtung (11) aufweist, die zwischen dem Rahmen (13) und dem Last tragenden Aufbau (11) wirkt, um die Beladevorrichtung um die Drehachse zu drehen.

5. Fahrzeug gemäß Anspruch 4, wobei die Drehachse im Wesentlichen senkrecht zu der Achse der Versetzung der Beladevorrichtung (9) durch die Versetzungsvorrichtung (20) ist.

6. Fahrzeug gemäß Anspruch 4, wobei die Drehachse an einem Ende des Rahmens (13) angebracht ist und die Drehaktuatorvorrichtung (11) an einem gegenüberliegenden Ende (23) des Rahmens (13), von der Drehachse entfernt, wirkt.

7. Fahrzeug entsprechend einem oder mehreren der vorhergehenden Ansprüche, wobei das Fahrzeug selbstfahrend ist.

## Revendications

1. Camion mélangeur pour préparer des mélanges d'aliments, comprenant une structure de support de charge (2), un récipient mélangeur (7) monté sur la structure de support de charge (2), et des moyens (3), associés avec la structure de support de charge (2), pour charger le récipient de mélange (7), moyennant quoi les moyens de charge (3) comprennent un chargeur broyeur (10) et des moyens (20) sont fournis pour translater les moyens de charge (3) par rapport à ladite structure de support de charge (2) audit récipient de mélange (7), en les approchant et les éloignant du récipient de mélange (7) entre une première position fonctionnelle, dans laquelle ils s'éloignent du récipient de mélange le plus loin possible et une seconde position non fonctionnelle, dans laquelle ils sont au moins partiellement superposés sur la structure de support de charge (2) et au moins partiellement logés dans le récipient de mélange (7).

2. Camion selon la revendication 1, dans lequel les moyens (20) pour translater les moyens de charge (3) comprennent des moyens d'actionnement (29) agissant entre les moyens de charge (3) et la structure de support de charge (2) et des moyens de guidage (21) constituant un support pour les moyens de charge (3) sur la structure de support de charge (2).

3. Camion selon la revendication 2, dans lequel les moyens de charge (3) comprennent un premier prolongement faisant saillie latéralement (12a) et un second prolongement faisant saillie latéralement (12b), et les moyens de guidage (21) comprennent un bâti (13) monté à pivotement sur la structure de support de charge (2) et supportant les éléments de guidages respectifs (15, 16a, 16b) dans lequel lesdits prolongements (12a, 12b) sont retenus à coulissement.

4. Camion selon la revendication 3, dans lequel le cadre (13) peut pivoter autour d'un axe de basculement sensiblement horizontal et a des moyens de mise en action de basculement (11) agissant entre le cadre (13) et la structure de support de charge (2) afin de faire basculer les moyens de charge autour de l'axe de basculement.

5. Camion selon la revendication 4, dans lequel l'axe de basculement est sensiblement perpendiculaire à l'axe de translation des moyens de charge (3) par les moyens de translation (20).

6. Camion selon la revendication 4, dans lequel l'axe de basculement est disposé à une extrémité du bâti (13) et les moyens de mise en action de basculement (11) agissent sur une extrémité opposée (23) du bâti (13), à distance de l'axe de basculement.

7. Camion selon une ou plus des revendications précédentes, dans lequel le camion est autopropulsé.
